# EUROPÄISCHE PATENTANMELDUNG

(11) **EP 0 563 856 A1**
(43) Veröffentlichungstag der Anmeldung: **06.10.1993**
(21) Anmeldenummer: 93105180.9
(22) Anmeldetag: 29.03.1993
(51) Int. Cl.: B60K 7/00, B62D 51/00, B66F 9/075, B62B 3/06

(54) **Flurförderzeug mit einer ein Antriebsrad tragenden Antriebseinheit**

(30) Priorität: 02.04.1992 DE 4211027
(71) Anmelder: Linde Aktiengesellschaft, D-65189 Wiesbaden (DE)
(72) Erfinder: Soulas, Frank, F-86150 L'Isle Jourdain (DE); Cartier, Guy, F-86200 Loudun (FR)
(74) Vertreter: Schaefer, Gerhard, Dr.

(57) **Zusammenfassung**

Ein insbesondere deichselgelenktes Flurförderzeug weist eine ein Antriebsrad (3) tragende Antriebseinheit auf. Die Antriebseinheit besteht aus einem oberhalb des Antriebsrades (3) angeordneten Elektromotor (4) mit zur Rotationsachse (R) des Antriebsrades (3) paralleler Welle, der an einem sich vertikal nach unten erstreckenden, parallel zum Antriebsrad (3) angeordneten Getriebegehäuse (5) eines nachgeschalteten Getriebes befestigt ist. Auf dem aus dem unteren Ende des Getriebegehäuses (5) horizontal herausragenden Ausgangselement des Getriebes ist das Antriebsrad (3) gelagert. Das Getriebegehäuse (5) und damit die Antriebseinheit ist mittels eines zwischen dem Antriebsrad (3) und dem Elektromotor (4) angeordneten Drehlagers (6) um eine vertikale Achse (V) schwenkbar am Fahrgestell gelagert. Zur Vergrößerung des Schwenkbereiches ist das Drehlager (6) an einem mit dem Fahrgestell (1) verbundenen Tragarm (8) befestigt, der, bezogen auf seine horizontale Längsachse (H), unter einen Winkel von annähernd 45 Grad zur Längsachse (L) des Flurförderzeugs angeordnet ist.

## Beschreibung

Die Erfindung betrifft ein Flurförderzeug, insbesondere deichselgelenktes Flurförderzeug, mit einem Antriebsrad und einer Antriebseinheit, die einen oberhalb des Antriebsrades angeordneten Elektromotor mit zur Rotationsachse des Antriebsrades paralleler Welle aufweist, der an einem sich vertikal nach unten erstreckenden, parallel zum Antriebsrad angeordneten Getriebegehäuse eines nachgeschalteten Getriebes befestigt ist, wobei auf dem aus dem unteren Ende des Getriebegehäuses horizontal herausragenden Ausgangselement des Getriebes das Antriebsrad gelagert ist und wobei das Getriebegehäuse mittels eines zwischen dem Antriebsrad und dem Elektromotor angeordneten Drehlagers um eine vertikale Achse schwenkbar am Fahrgestell gelagert ist. Derartige Flurförderzeuge werden als Niederhubwagen, Hochhubwagen, Komissionierer und Schubmaststapler in Geh-, Sitz- und Standausführung verwendet. In der EP 0 400 275 A1 ist eine Antriebseinheit für ein gattungsgemäßes Flurförderzeug beschrieben, bei der das Drehlager an einem mit dem Fahrgestell verschraubten Vertikalzapfen befestigt ist. Gegenüber Anordnungen, bei denen die Lagerung der Antriebseinheit oberhalb des Elektromotors erfolgt, hat die gattungsgemäße Anordnung den Vorteil, daß durch die Plazierung des Drehlagers unmittelbar über dem Antriebsrad das auf das Drehlager einwirkende Kippmoment stark verringert ist. Es erweist sich jedoch als Nachteil, daß bei Einbau einer solchen Antriebseinheit in das Fahrgestell eines herkömmlichen Flurförderzeugs, bei dem ein in Fahrzeuglängsrichtung zur Deichsel hin angeordneter Ausleger zur Aufnahme des Drehlagers vorgesehen ist, der Schwenkbereich der Antriebseinheit und damit des Antriebsrads stark eingeschränkt ist. Dadurch wird die Handhabung eines solchen Flurförderzeugs, insbesondere das Rangieren, erschwert.

Der vorliegenden Erfindung liegt die Aufgabe zugrunde, ein Flurförderzeug der eingangs genannten Art zur Verfügung zu stellen, das eine zufriedenstellende Schwenkbarkeit des Antriebsrads ermöglicht.

Diese Aufgabe wird erfindungsgemäß dadurch gelöst, daß das Drehlager an einem mit dem Fahrgestell verbundenen Tragarm befestigt ist, der, bezogen auf seine horizontale Längsachse, unter einen Winkel von annähernd 45 Grad zur Längsachse des Flurförderzeugs angeordnet ist. Es ergibt sich somit ausgehend von der Mittellage, in der die Drehachse des Antriebsrads zur Fahrzeuglängsachse senkrecht ist, ein nach beiden Seiten erheblich vergrößerter Schwenkwinkel.

Weitere Vorteile und Einzelheiten der Erfindung werden anhand des in den Figuren schematisch dargestellten Ausführungsbeispieles näher erläutert.

Dabei zeigt:

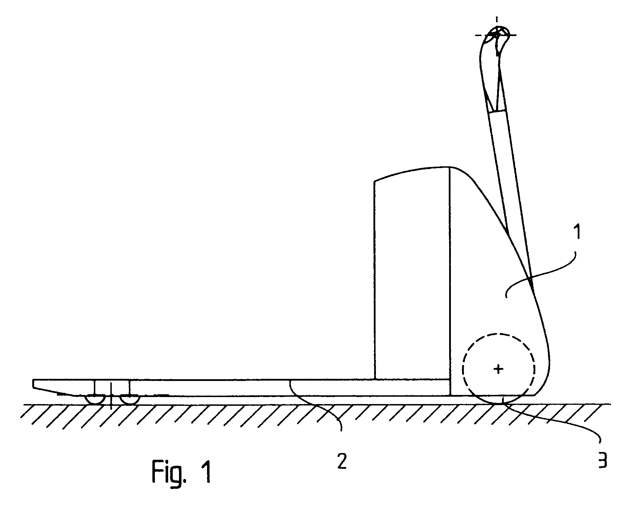

- Figur 1: eine Seitenansicht eines Elektro-Deichsel-Hubwagens;
- Figur 2: das Antriebsrad und die Antriebseinheit des Elektro-Deichsel-Hubwagens;
- Figur 3: eine Draufsicht auf das Fahrgestell des Elektro-Deichsel-Hubwagens.

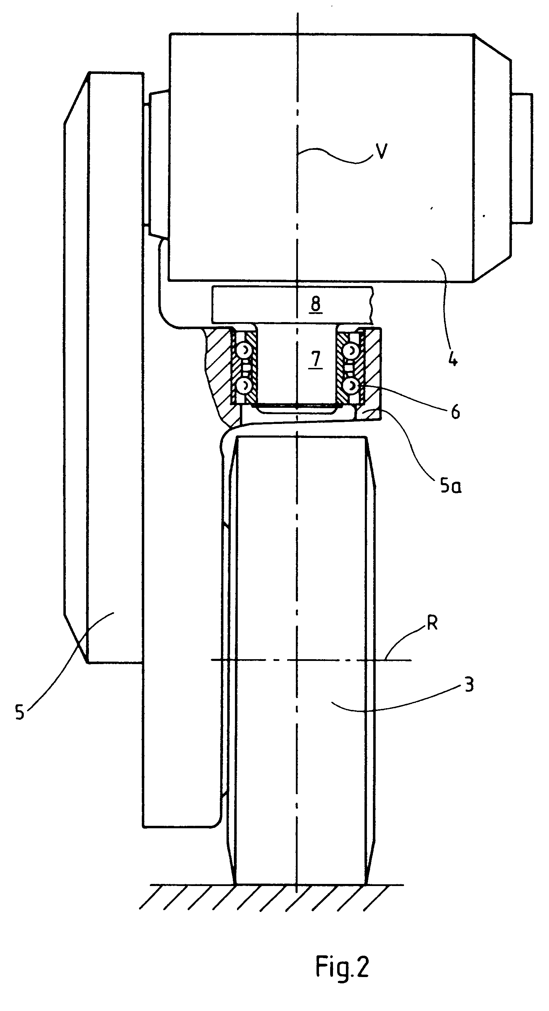

Das in diesem Ausführungsbeispiel als Elektro-Deichsel-Hubwagen ausgebildete Flurförderzeug weist ein Fahrgestell 1 und damit höhenbeweglich verbundene Lastgabeln 2 auf. Das Fahrgestell 1 ist mit einem Antriebsrad 3 versehen, das von einer in der Figur 2 dargestellten Antriebseinheit angetrieben wird.

Die Antriebseinheit weist einen oberhalb des Antriebsrades 3 parallel zu dessen Rotationsachse R angeordneten Elektromotor 4 auf, dem ein Getriebe nachgeschaltet ist. Das Getriebe kann als Stirnrad- oder Zugmittelgetriebe ausgebildet sein und befindet sich innerhalb eines zum Antriebsrad 3 parallelen Getriebegehäuses 5, das sich nach vertikal unten erstreckt. Das bevorzugt gegossene Getriebegehäuse 5 weist an seinem unteren Ende eine horizontal herausragende Abtriebswelle auf, auf der das Antriebsrad 3 gelagert ist.

Das Getriebegehäuse 5 ist ferner mit einem angeformten Ausleger 5 versehen, der sich in den Bereich zwischen das Antriebsrad 3 und den Elektromotor 4 erstreckt und der den Außenring eines als Wälzlager ausgebildeten Drehlagers 6 aufnimmt. Der Innenring des Drehlagers 6 ist auf einem Zapfen 7 befestigt, der mit einem Tragarm 8 des Fahrgestells 8 verbunden ist. Das Getriebegehäuse 5 und damit die Antriebseinheit einschließlich des Antriebsrads 3 ist mittels des Drehlagers 6 um eine vertikale Achse V schwenkbar am Fahrgestell gelagert. Diese vertikale Achse V schneidet die Rotationsachse R in der Radmittelebene und verläuft somit durch das Zentrum der Radaufstandsfläche.

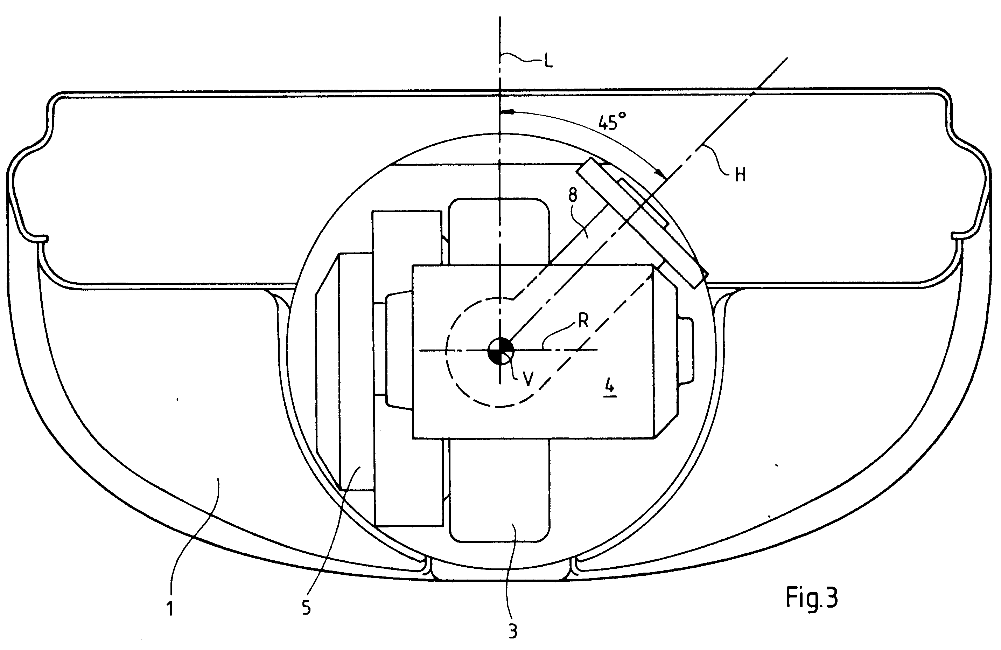

Die Position des Tragarms 8 in der Horizontalen ist in Figur 3 dargestellt. Der Tragarm 8 ist derart mit dem Fahrgestell 1 in dessen lastgabelnahen Bereich verbunden, daß sich ein Winkel von annähernd 45 Grad zwischen der horizontalen Längsachse H des Tragarms 8 und der Längsachse L des Flurförderzeugs ergibt Auf diese Weise wird ein weiter Schwenkbereich der Antriebseinheit ermöglicht. Besonders vorteilhaft ist es dabei, wenn der Tragarm 8 asymmetrisch ausgebildet ist, so daß die Antriebseinheit um jeweils 90 Grad nach beiden Seiten verschwenkbar ist.

## Patentansprüche

1. Flurförderzeug, insbesondere deichselgelenktes Flurförderzeug, mit einer ein Antriebsrad tragenden Antriebseinheit, die einen oberhalb des Antriebsrades angeordneten Elektromotor mit zur Rotationsachse des Antriebsrades paralleler Welle aufweist, der an einem sich vertikal nach unten erstreckenden, parallel zum Antriebsrad angeordneten Getriebegehäuse eines nachgeschalteten Getriebes befestigt ist, wobei auf dem aus dem unteren Ende des Getriebegehäuses horizontal herausragenden Ausgangselement des Getriebes das Antriebsrad gelagert ist und wobei das Getriebegehäuse mittels eines zwischen dem Antriebsrad und dem Elektromotor angeordneten Drehlagers um eine vertikale Achse schwenkbar am Fahrgestell gelagert ist, **dadurch gekennzeichnet**, daß das Drehlager (6) an einem mit dem Fahrgestell (1) verbundenen Tragarm (8) befestigt ist, der, bezogen auf seine horizontale Längsachse (H), unter einen Winkel von annähernd 45 Grad zur Längsachse (L) des Flurförderzeugs angeordnet ist.
